# DEMANDE DE BREVET EUROPEEN

(11) **EP 1 314 596 A1**
(43) Date de publication de la demande: **28.05.2003**
(21) Numéro de dépôt: 02368114.1
(22) Date de dépôt: 16.10.2002
(51) Int. Cl.: B60J 1/20, B60J 3/04

(54) **Pare-soleil pour vehicule automobile**

(30) Priorité: 16.10.2001 FR 0113318
(71) Demandeur: Gignac, Patrick, 06560 Valbonne (FR); Trony, Carole, 06560 Valbonne (FR)
(72) Inventeur: Gignac, Patrick, 06560 Valbonne (FR); Trony, Carole, 06560 Valbonne (FR)
(74) Mandataire: Bonneau, Gérard

(57) **Abrégé**

Dispositif pare-soleil destiné à être apposé sur la vitre arrière ou les vitres latérales arrière d'un véhicule automobile, comportant un motif formé d'une ou plusieurs couleurs pour absorber au moins partiellement le rayonnement du soleil. Le motif est obtenu par l'impression d'au moins une partie de la surface du dispositif pare-soleil au moyen d'une ou plusieurs encres qui changent de couleur sous l'effet de la chaleur resultant de l'absorption du rayonnement du soleil par la ou les encres utilisées.

## Description

La présente invention concerne un pare-soleil amélioré adapté pour être utilisé dans un véhicule automobile où tout autre endroit ou cet objet peut être utile.

De manière à éviter que le soleil gêne les occupants d'un véhicule automobile, il est devenu courant de fixer des pare-soleil sur les vitres des portières des véhicules automobiles, en particulier sur les vitres des portières arrière de manière à améliorer le confort des passagers. Ces pare-soleil sont toutefois plus difficilement utilisable pour les portières avant dans la mesure où, bien qu'ils ne soient pas opaques, ils arrêtent une grande partie de la lumière et de ce fait peuvent constituer une entrave à la visibilité du conducteur.

Les pare-soleil vendus dans le commerce sont des plaques en matière plastique constituées d'un tissu maillé d'une couleur grise de façon à absorber le rayonnement du soleil et généralement agrémentés d'un motif tel qu'un personnage de bande dessinée ou de dessin animé. Ces pare-soleil sont donc ternes, sans aucune esthétique et de ce fait ne contribuent pas à un agrément des passagers même s'ils améliorent leur confort. En outre, ils obscurcissent l'habitacle des passagers lorsqu'il n'y a pas de soleil.

C'est pourquoi le but de l'invention est de fournir un dispositif pare-soleil ayant des couleurs agréables et changeantes de façon à agrémenter l'habitacle d'un véhicule automobile en même temps qu'il améliore le confort des passagers.

L'objet de l'invention est donc un dispositif pare-soleil destiné à être apposé sur la vitre arrière ou les vitres latérales arrière d'un véhicule automobile, comportant un motif formé d'une ou plusieurs couleurs pour absorber au moins partiellement le rayonnement du soleil. Le motif est obtenu par l'impression d'au moins une partie de la surface du dispositif pare-soleil au moyen d'une ou plusieurs encres qui changent de couleur sous l'effet de la chaleur resultant de l'absorption du rayonnement du soleil par ladite ou lesdites encres.

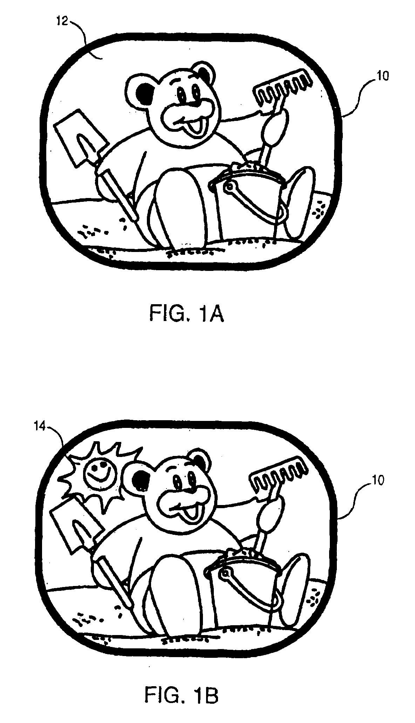

Les buts, objets et caractéristiques de l'invention ressortiront mieux à la lecture de la description qui suit faite en référence aux figures 1A et 1B qui représentent respectivement un dispositif pare-soleil lorsqu'il n'y a pas de soleil et le même dispositif pare-soleil dont les couleurs ont été changées grâce au rayonnement du soleil.

Le dispositif pare-soleil selon l'invention peut se présenter sous forme d'un cadre rigide, rectangulaire aux coins arrondis tel qu'illustré sur les figures 1A et 1B. Un tissu de préférence maillé est tendu à l'intérieur du cadre. Un motif tel qu'un ours se trouvant sur une plage est imprimé sur le tissu et lorsque le dispositif n'est pas exposé au soleil, le motif comporte certaines couleurs, par exemple le ciel 12 de la figure 1A est gris et il n'y a pas de soleil dans le ciel.

Le dispositif pare-soleil est placé en contact de la vitre arrière ou l'une des vitres latérales arrière du véhicule automobile. Sous l'effet du rayonnement du soleil, la température à la surface du tissu augmente du fait que le rayonnement est absorbé par l'encre d'impression. La température de la surface augmente alors et lorsqu'elle atteint un seuil déterminé, par exemple 27°C, dépendant de l'encre utilisée, les couleurs changent. Ainsi, le ciel gris de la figure 1A devient bleu et un soleil 14 illustré sur la figure 1B apparaît dans le cadre. A noter que ce changement de couleur peut aller jusqu'à la disparition pure et simple de la couleur de certaines portions du pare-soleil.

Un tel dispositif pare-soleil est beaucoup plus plaisant que les dispositifs pare-soleil classiques qui sont usuellement gris. En outre, ce changement dans les couleurs et le motif est un sujet d'intérêt pour les passagers et en particulier pour des enfants qui souvent n'apprécient pas les trajets longs et monotones.

Dans un autre mode de réalisation, le dispositif pare-soleil peut être imprimé à l'aide d'une encre dont la couleur apparaissant lorsque la température atteint un seuil prédéterminé correspond à une ou plusieurs couleurs absorbantes, par exemple une couleur plus foncée. Ainsi, le dispositif apparaît dans la couleur absorbante seulement lorsque le soleil brille et donc empêche le rayonnement de pénétrer plus avant dans l'habitacle du véhicule et de faire monter la température. Si le véhicule est équipé d'un dispositif de climatisation, l'absorption du rayonnement du soleil par le dispositif pare-soleil est intéressante dans la mesure où elle évite une dépense supplémentaire d'énergie (et donc une économie d'essence) à fournir au dispositif de climatisation. A noter que si le véhicule n'est pas équipé d'un dispositif de climatisation, le changement de couleur peut servir à indiquer que la température a atteint la valeur de seuil.

L'encre utilisée pour la mise en oeuvre de l'invention contient des pigments spécifiques se modifiant à un certain seuil de température et est commercialisée sous le nom d'encre thermochrome sur base aqueuse, par exemple sous le nom de marque THERMOCHROMIC INC AQ CR. Le seuil de température au delà duquel la couleur change varie selon les pigments utilisés dans l'encre. A noter que les pigments utilisés peuvent être des pigments fluorescents.

A noter également que le dispositif pare-soleil pourrait être sous toute autre forme qu'un cadre rigide sans pour cela sortir de l'invention. Ainsi il est possible de le faire sous forme d'un store que l'on accroche à un point d'accrochage haut et que l'on déroule devant la vitre lorsqu'on l'utilise dans le véhicule automobile.

## Revendications

1. Dispositif pare-soleil destiné à être apposé sur la vitre arrière ou les vitres latérales arrière d'un véhicule automobile comportant un motif formé d'une ou plusieurs couleurs pour absorber au moins partiellement le rayonnement du soleil, **caractérisé en ce que** ledit motif est obtenu par l'impression d'au moins une partie de la surface du dispositif pare-soleil au moyen d'une ou plusieurs encres qui changent de couleur sous l'effet de la chaleur resultant de l'absorption du rayonnement du soleil par ladite ou lesdites encres.

2. Dispositif pare-soleil selon la revendication 1, dans lequel ledit changement de couleur se produit lorsque la température de ladite partie de la surface du dispositif atteint un seuil prédéterminé.

3. Dispositif pare-soleil selon la revendication 2, dans lequel le changement de couleur sous l'effet de la chaleur entraîne l'apparition d'un motif (14) non visible avant ledit changement de couleur.

4. Dispositif pare-soleil selon la revendication 2, dans lequel une ou plusieurs couleurs disparaissent sur une partie de la surface du dispositif lorsque la température sur ladite partie de la surface atteint ledit seuil prédéterminé.

5. Dispositif pare-soleil selon la revendication 2, dans lequel le changement de couleur se produisant lorsque la température de ladite surface du dispositif atteint ledit seuil prédéterminé correspond à l'apparition d'au moins une couleur absorbante du rayonnement du soleil.

6. Dispositif pare-soleil selon l'une des revendications 1 à 5, comprenant un cadre rigide (10) dans lequel est tendu un tissu maillé sur lequel est imprimé ledit motif.

7. Dispositif pare-soleil selon l'une des revendications 1 à 5, étant un store qui est déroulé et accroché contre la vitre du véhicule automobile lorsqu'on désire l'utiliser comme pare-soleil.
